# EUROPEAN PATENT SPECIFICATION

(11) **EP 4 475 241 B1**
(45) Date of publication and mention of the grant of the patent: **25.02.2026**
(21) Application number: 23907258.0
(22) Date of filing: 04.07.2023
(51) Int. Cl.: H01M 10/04, H01M 50/403, B01D 29/72, B01D 29/085, H01M 50/446

(54) **SLURRY FILTERING APPARATUS AND SEPARATOR MANUFACTURING SYSTEM INCLUDING SAME**
SCHLAMMFILTERVORRICHTUNG UND SEPARATORHERSTELLUNGSSYSTEM, DIE DIESE ENTHÄLT
APPAREIL DE FILTRATION DE BOUES ET SYSTÈME DE FABRICATION DE SÉPARATEURS COMPRENANT UN TEL APPAREIL

(30) Priority: 23.12.2022 KR 20220182926; 28.02.2023 KR 20230027312
(43) Date of publication of application: 11.12.2024
(73) Proprietor: LG Energy Solution, Ltd., Seoul 07335 (KR)
(72) Inventor: KIM, Ki-Deok, Daejeon 34122 (KR); KIM, Ga-Yeon, Daejeon 34122 (KR); LEE, Je-An, Daejeon 34122 (KR)
(74) Representative: Hoffmann Eitle
(86) International application number: PCT/KR2023/009427
(87) International publication number: WO 2024/135966

(56) References cited:
- CN-B- 113 730 992
- KR-A- 20070 008 183
- KR-A- 20070 008 183
- KR-A- 20100 033 795
- KR-A- 20100 033 795
- KR-A- 20210 021 585
- KR-A- 20210 021 585
- KR-B1- 101 362 109
- KR-B1- 101 362 109
- KR-U- 19990 033 672
- KR-U- 19990 033 672
- US-A1- 2006 163 160
- US-B1- 6 221 255

## Description

### TECHNICAL FIELD

The present disclosure relates to a slurry filtering apparatus and a separator manufacturing system including the same, and more specifically, to a slurry filtering apparatus that filters slurry containing a coating material using ultrasonic waves and a separator manufacturing system for secondary batteries including the same.

### BACKGROUND ART

In general, secondary batteries refer to batteries capable of being repeatedly charged and discharged, such as lithium-ion batteries, lithium polymer batteries, nickel-cadmium batteries, nickel-hydrogen batteries, nickel-zinc batteries, and the like. These secondary batteries may be manufactured by storing an electrode assembly, including a positive electrode and a negative electrode laminated with an insulating separator interposed therebetween, and electrolyte materials in various types of cases and sealing the cases.

The separator of the secondary battery may be manufactured through a process of coating a porous polymer substrate with a slurry containing inorganic particles and binder polymer and then drying it. However, if the slurry for separator coating contains particles or foreign substances larger than the thickness of the separator or the thickness of the separator coating layer, there is a risk in which the separator may be physically damaged or may lose insulation during assembly of the secondary battery, resulting in a short circuit between electrodes. To prevent this risk, if the thickness of the separator is increased, the electrical capacity and energy density of the secondary battery will be lowered.

Accordingly, an existing technology uses a filter to remove large particles or foreign substances contained in the slurry, but in this existing technology, the filter is easily occluded due to the binder polymer contained in the slurry and the filter replacement cycle is short, thereby delaying the coating process or manufacturing process using slurry and increasing costs.

KR 101 362 109 B1 relates to a filtration apparatus used for removing solid contaminants contained in treatment water in a water treatment facility such as a water and sewage treatment plant and a heavy water supply facility.

US 2006/163160 A1 relates to a process for the separation and purification of microtubules of halloysite clay by separating an inlet stream of a liquid slurry of suspended clay particles flowing into a cross-flow filter into a decantate stream and a filtrate stream, the filtrate stream having a higher concentration of microtubular particles than the inlet stream.

CN 113 730 992 B relates to an automatic washing equipment for mesh filters of a biogas drip irrigation system and its application.

US 6 221 255 B1 relates to an ultrasound emitter, or gun, which emits an ultrasound beam directed at filter media, on the opposite side of the filter media from where solids accumulate, in order to knock the solids from the filter media.

### DISCLOSURE

### Technical Problem

The present disclosure has been designed to solve the problems of the related art, and therefore the present disclosure is directed to providing a slurry filtering apparatus capable of increasing the continuous use time of a slurry filter and the amount of filtering per unit time and reducing the time and cost of the coating process or manufacturing process using slurry, and a separator manufacturing system including such a slurry filtering apparatus.

In addition, the present disclosure is directed to providing a slurry filtering apparatus that facilitates the management and replacement of a slurry filter, and a separator manufacturing system including such a slurry filtering apparatus.

In addition, the present disclosure is directed to providing a slurry filtering apparatus that ensures the durability and insulation of a separator for secondary batteries and enables thinning of the separator, thereby improving the electrical capacity and energy density of secondary batteries, and a separator manufacturing system including such a slurry filtering apparatus.

### Technical Solution

The present invention is defined by the slurry filtering apparatus according to claim 1. Optional preferred embodiments are recited in the dependent claims. A slurry filtering apparatus according to one aspect of the present disclosure may include: an accommodation structure having an accommodation space therein, and a first inlet and a first outlet leading to the accommodation space; a filter accommodated in the accommodation space and configured to filter slurry flowing in through the first inlet and discharge the filtered slurry to the first outlet; and an ultrasonic module having at least a portion that is disposed in the internal space of the filter and configured to generate ultrasonic vibration inside the filter.

In an embodiment, the accommodation structure may include: a base structure having the first inlet and the first outlet and configured to support the filter; and a cap structure capable of being coupled to and separated from the base structure and configured to form the accommodation space by being coupled to the base structure.

In an embodiment, the base structure may include: a first insertion groove into which at least one end of the filter is inserted so as to be seated thereon; a second insertion groove provided on an inner surface of the first insertion groove so as to lead to the first inlet and into which a second inlet provided at the one end of the filter is inserted; and a third insertion groove provided on the inner surface of the first insertion groove so as to lead to the first outlet and into which a second outlet provided at the one end of the filter is inserted.

In an embodiment, the filter may include a porous structure configured to filter slurry flowing in through the first inlet, and the at least a portion of the ultrasonic module may be configured to be disposed in a hollow provided inside the porous structure.

In an embodiment, the porous structure may include a plurality of porous layers stacked on each other from the hollow toward the outside of the porous structure.

In an embodiment, pores formed in the plurality of porous layers may be configured to have a smaller size as they are located closer to the hollow.

In an embodiment, the filter may further include a filter housing configured to accommodate the porous structure therein, and the filter housing may include: a second inlet leading to the first inlet and providing slurry flowing in through the first inlet to the porous structure; and a second outlet leading to the first outlet and discharging slurry filtered through the porous structure to the first outlet.

In an embodiment, the porous structure may have an opening leading to the hollow, and the opening may be configured to lead to the second outlet.

The ultrasonic module includes an insertion rod having a predetermined length and having at least one end inserted into the internal space of the filter; and at least one vibrator coupled to and supported by the one end of the insertion rod and configured to generate ultrasonic vibration.

In an embodiment, the ultrasonic module may include a plurality of vibrators, and the plurality of vibrators may be coupled to the one end of the insertion rod so as to be spaced a predetermined distance apart from each other in the longitudinal direction of the insertion rod.

In an embodiment, the ultrasonic module may further include an oscillator configured to generate a high-frequency electrical signal corresponding to an oscillation frequency of the at least one vibrator and provide the same to the at least one vibrator.

In an embodiment, the insertion rod may be configured to be inserted into the internal space of the filter through the first outlet.

A separator manufacturing system according to another aspect of the present disclosure includes the slurry filtering apparatus according to any one of the embodiments described above.

### Advantageous Effects

According to the present disclosure, since at least a portion of an ultrasonic module is disposed in the internal space of the filter to generate ultrasonic vibration from the inside of the filter toward the outside thereof, it is possible to effectively prevent occlusion of the innermost porous portions of the filter where aggregation of particles contained in the slurry occurs most frequently. As a result, it is possible to increase the continuous use time of the filter and the amount of filtering per unit time and reduce the time and cost of the coating process or manufacturing process using slurry.

In addition, since a base structure and a cap structure of an accommodation structure, which form a filter accommodation space by mutual coupling, are configured to be separated from each other, it is easy to manage or replace the filter.

In addition, since a porous structure of the filter, which filters the slurry, includes a plurality of porous layers stacked on each other from the hollow provided inside the porous structure toward the outside of the porous structure, it is possible to improve the performance of filtering particles contained in the slurry.

In addition, since the pores formed in the respective porous layers are configured to have a smaller diameter as they are located closer to the hollow, it is possible to prevent occlusion of the pores by the particles contained in the slurry and increase the effect of dispersing particles by ultrasonic vibration.

In addition, since vibrators of the ultrasonic module are disposed in the internal space of the filter so as to be spaced apart from each other in one direction and configured to generate ultrasonic vibration, it is possible to increase the transmission area of ultrasonic vibration transmitted to the filter and further improve the filtering performance.

In addition, by applying the slurry filtering apparatus according to the present disclosure to a separator manufacturing system, it is possible to reduce the time and cost of the separator coating process or manufacturing process, ensure the durability and insulation of the separator, and enable thinning of the separator, thereby improving the electrical capacity and energy density of secondary batteries.

Furthermore, those skilled in the art to which the present disclosure pertains will be able to clearly understand from the following description that various embodiments according to the present disclosure are able to solve various technical problems not mentioned above.

### DESCRIPTION OF DRAWINGS

FIG. 1 is a perspective view illustrating a slurry filtering apparatus according to an embodiment of the present disclosure.
FIG. 2 is an exploded perspective view illustrating the slurry filtering apparatus shown in FIG. 1.
FIG. 3 is a diagram illustrating the internal structure of a filter included in a slurry filtering apparatus according to an embodiment of the present disclosure.
FIG. 4 is a diagram illustrating an example of a porous structure manufacturing method applicable to the filter shown in FIG. 3.
FIG. 5 is a cross-sectional view taken along line S1-S1' of the slurry filtering apparatus shown in FIG. 1.
FIG. 6 is a diagram illustrating a separator manufacturing system according to an embodiment of the present disclosure.

### BEST MODE

Hereinafter, embodiments according to the present disclosure will be described in detail with reference to the accompanying drawings to clarify solutions corresponding to the technical problems of the present disclosure. However, in describing the present disclosure, a description of related known technology, which may obscure the subject matter of the present disclosure, may be omitted. In addition, the terms used in this specification are defined in consideration of the functions in the present disclosure and may vary depending on the intention of the designer, manufacturer, etc. or custom thereof. Therefore, definitions of the terms described below should be made based on the description throughout this specification.

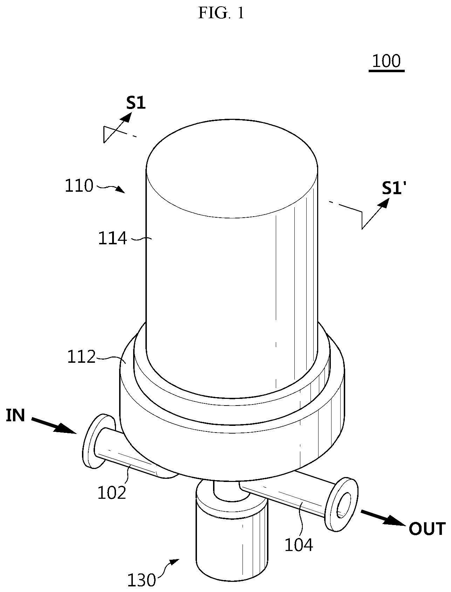

FIG. 1 is a perspective view illustrating a slurry filtering apparatus 100 according to an embodiment of the present disclosure.

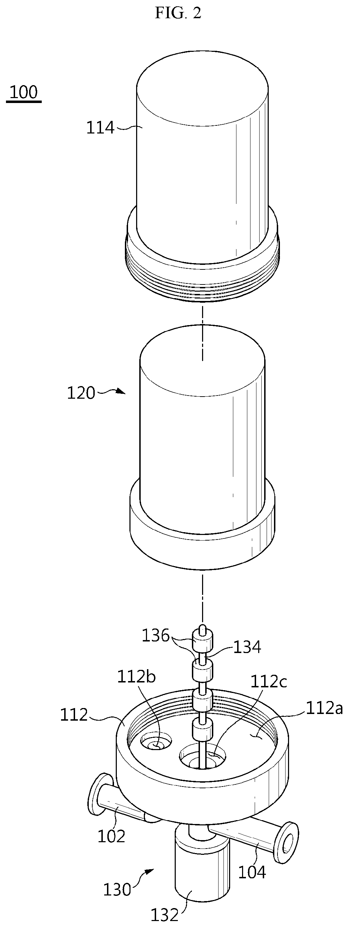

FIG. 2 is an exploded perspective view illustrating the slurry filtering apparatus 100 shown in FIG. 1.

As shown in FIGS. 1 and 2, a slurry filtering apparatus 100 according to an embodiment of the present disclosure includes an accommodation structure 110, a filter 120, and an ultrasonic module 130.

The accommodation structure 110 has an accommodation space therein and includes a first inlet 102 and a first outlet 104 that lead to the accommodation space. A filter 120 for filtering slurry is accommodated in the accommodation space provided inside the accommodation structure 110. The slurry supplied from a predetermined slurry supply device (not shown) and flowing in through the first inlet 102 may be provided to the filter 120 accommodated in the accommodation space, and the slurry filtered by the filter 120 may be discharged through the outlet 104.

In an embodiment, the accommodation structure 110 may include a base structure 112 and a cap structure 114.

In this case, the base structure 112 of the accommodation structure 110 may have the first inlet 102 and the first outlet 104 and may be configured to support the filter 120. To this end, the base structure 112 may include a first insertion groove 112a, a second insertion groove 112b, and a third insertion groove 112c.

The first insertion groove 112a may be configured such that at least one end of the filter 120 is inserted into and seated on the same.

The second insertion groove 112b may be provided on the inner surface of the first insertion groove 112a to lead to the first inlet 102, and may be configured such that a second inlet provided at the one end of the filter 120 is inserted thereto.

The third insertion groove 112c may be provided on the inner surface of the first insertion groove 112a to lead to the first outlet 104, and may be configured such that a second outlet provided at the one end of the filter 120 is inserted thereto.

For example, the lower end of the filter 120 may be inserted into and seated on the first insertion groove 112a. In addition, the lower end of the filter 120 may have a second inlet and a second outlet configured in a tube structure and protruding therefrom. The second inlet of the filter 120 may be inserted into the second insertion groove 112b so as to lead to the first inlet 102 of the accommodation structure 110, and the second outlet of the filter 120 may be inserted into the third insertion groove 112c so as to lead to the first outlet 104 of the accommodation structure 110.

The cap structure 114 of the accommodation structure 110 may be coupled to and separated from the base structure 112 described above, and may be configured to form an accommodation space for accommodating the filter 120 by coupling with the base structure 112.

For example, the base structure 112 and the cap structure 114 of the accommodation structure 110 may be configured to be coupled by a screw engagement method. To this end, a thread may be formed on the inner surface of the first insertion groove 112a of the base structure 112, and a corresponding thread may be formed on the outer circumferential surface of the lower end of the cap structure 114.

As described above, since the base structure 112 and the cap structure 114 of the accommodation structure 110, which form the filter accommodation space by mutual coupling, are configured to be separated from each other, it is easy to manage or replace the filter.

As will be explained again below, the filter 120 is accommodated in the accommodation space provided inside the accommodation structure 110 and is configured to filter the slurry flowing in through the first inlet 102 and discharge the filtered slurry to the first outlet 104.

At least a portion of the ultrasonic module 130 is disposed in the internal space of the filter 120 and is configured to generate ultrasonic vibration from the inside of the filter 120 to the outside thereof. To this end, the ultrasonic module 130 may include an oscillator 132, an insertion rod 134, and a vibrator 136.

The oscillator 132 may be configured to generate a high-frequency electrical signal corresponding to the oscillation frequency of the vibrator 136 and provide the same to the vibrator 136. The frequency of the high-frequency electrical signal generated by the oscillator 132 may range from 30 to 10,000 [kHz].

The insertion rod 134 has a specific length and is configured such that at least one end thereof is inserted into the internal space of the filter 120. This insertion rod 134 may serve as a support structure for supporting the vibrator 136. Depending on the embodiment, the insertion rod 134 may also be configured to serve as a connection member that electrically connects the oscillator 132 and the vibrator 136.

This insertion rod 134 may be configured to be inserted into the internal space of the filter 120 through the first outlet 104 of the accommodation structure 110. That is, the insertion rod 134 may be inserted into the internal space of the filter 120 through the first outlet 104 of the accommodation structure 110, the third insertion groove 112c of the accommodation structure 110 leading to the first outlet 104, and the second outlet of the filter 120 inserted into the third insertion groove 112c.

The vibrator 136 is coupled to and supported by one end of the insertion rod 134 located in the internal space of the filter 120, and may be configured to generate ultrasonic vibration according to a high-frequency electrical signal provided from the oscillator 132. To this end, the vibrator 136 may include a piezo-electric vibrator or a magnetostrictive vibrator.

In an embodiment, the ultrasonic module 130 may include a plurality of vibrators 136. In this case, the plurality of vibrators 136 may be coupled to one end of the insertion rod 134 located in the internal space of the filter 120 so as to be spaced a predetermined distance apart from each other in the longitudinal direction of the insertion rod 134. For example, the plurality of vibrators 136 may be coupled to the insertion rod 134 so as to be spaced apart from each other by a predetermined distance ranging from 10 to 50 [mm].

As described above, since at least a portion of the ultrasonic module 130 is disposed in the internal space of the filter 120 to generate ultrasonic vibration from the inside of the filter 120 to the outside thereof, it is possible to effectively prevent occlusion of the innermost porous parts of the filter where aggregation of particles contained in the slurry occurs most frequently. As a result, it is possible to increase the continuous use time of the filter and the amount of filtering per unit time and reduce the time and cost of the coating process or manufacturing process using slurry.

In addition, since vibrators of the ultrasonic module 130 are disposed in the internal space of the filter 120 so as to be spaced a predetermined distance apart from each other in one direction and configured to generate ultrasonic vibration, it is possible to increase the transmission area of ultrasonic vibration transmitted to the filter and further improve the filtering performance.

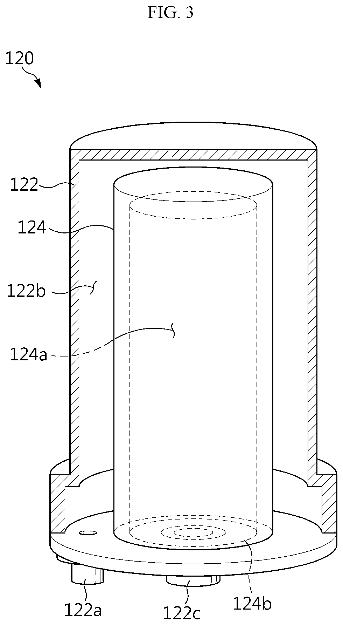

FIG. 3 is a diagram illustrating the internal structure of a filter 120 included in a slurry filtering apparatus according to an embodiment of the present disclosure.

As shown in FIG. 3, the filter 120 may include a filter housing 122 and a porous structure 124.

The filter housing 122 may be configured to accommodate the porous structure 124 therein. This filter housing 122 may include a second inlet 122a, an accommodation space 122b, and a second outlet 122c.

The second inlet 122a may be configured to lead to the first inlet 102 of the above-described accommodation structure 110 and provide the slurry flowing in through the first inlet 102 to the porous structure 124 accommodated in the accommodation structure 110. As mentioned above, the second inlet 122a may be configured in a tube structure and may protrude outside the filter 120 so as to be inserted into the second insertion groove 112b provided in the base structure 112 of the accommodation structure 110.

The accommodation space 122b may be configured to accommodate the slurry flowing in through the porous structure 124 and the second inlet 122a.

The second outlet 122c may be configured to lead to the first outlet 104 of the accommodation structure 110 and discharge the slurry filtered through the porous structure 124 to the first outlet 104. As mentioned above, the second outlet 122c may have a tubular structure and protrude outside the filter 120 so as to be inserted into the third insertion groove 112c provided in the base structure 112 of the accommodation structure 110.

The porous structure 124 may be configured to have multiple pores and filter slurry flowing in through the first inlet 102 of the accommodation structure 110 and the second inlet 122a of the filter housing 122.

To this end, the porous structure 124 may have a hollow 124a formed therein and an opening 124b leading to the hollow 124a. The opening 124b of the porous structure 124 may be configured to lead to the second outlet 122c of the filter housing 122.

That is, the slurry contained in the accommodation space 122b of the filter housing 122 is filtered by passing through the porous structure 124, and the filtered slurry is collected in the hollow 124a of the porous structure 124. The slurry collected in the hollow of the porous structure 124 may be discharged to the first outlet 104 of the accommodation structure 110 through the opening 124b of the porous structure 124 and the second outlet 122c of the filter housing 122.

In this case, a portion of the ultrasonic module 130 may be disposed in the hollow 124a provided inside the porous structure 124. That is, the insertion rod 134 and the vibrator 136 of the ultrasonic module 130 may be disposed in the hollow 124a of the porous structure 124.

In an embodiment, the porous structure 124 may include a plurality of porous layers stacked on each other from the hollow 124a toward the outside of the porous structure 124. In this case, the pores formed in the plurality of porous layers may be configured to have a smaller size as they are located closer to the hollow 124a.

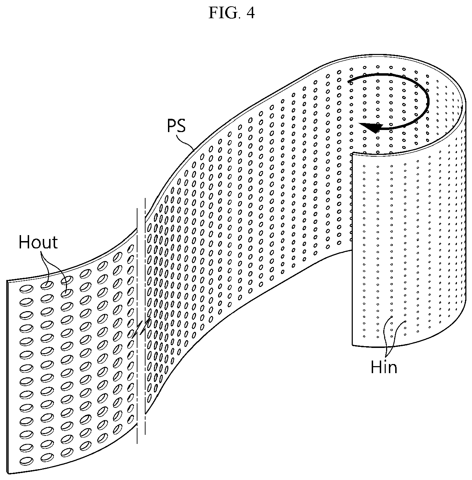

FIG. 4 is a diagram illustrating an example of a porous structure manufacturing method applicable to the filter 120 shown in FIG. 3.

As shown in FIG. 4, the porous structure 124 may be manufactured by winding a porous substrate PS in the form of a sheet or film in one direction. As a result, the porous structure 124 may include a plurality of porous layers stacked on each other from the hollow 124a toward the outside of the porous structure 124.

In this case, the pores Hᵢₙ and Rₒᵤₜ formed in the plurality of porous layers may be configured to have a smaller size as they are located closer to the hollow 124a. To this end, the sizes of the pores Hᵢₙ and Hₒᵤₜ formed in the porous substrate PS may be configured to be gradually reduced as they are located from one end of the porous substrate PS, which corresponds to the outer portion thereof after winding, to the other end of the porous substrate PS, which corresponds to the inner portion thereof after winding. That is, the size of the pore Hᵢₙ formed on the other end of the porous substrate PS may be less than the size of the pore Hₒᵤₜ formed on one end of the porous substrate PS.

As described above, since the porous structure 124 of the filter 120 includes a plurality of porous layers stacked on each other from the hollow 124a provided therein toward the outside of the porous structure 124, it is possible to improve the performance of filtering particles contained in the slurry.

In addition, since the pores formed in the respective porous layers are configured to have a smaller diameter as they are located closer to the hollow 124a, it is possible to prevent occlusion of the pores by the particles contained in the slurry and increase the effect of dispersing particles by ultrasonic vibration.

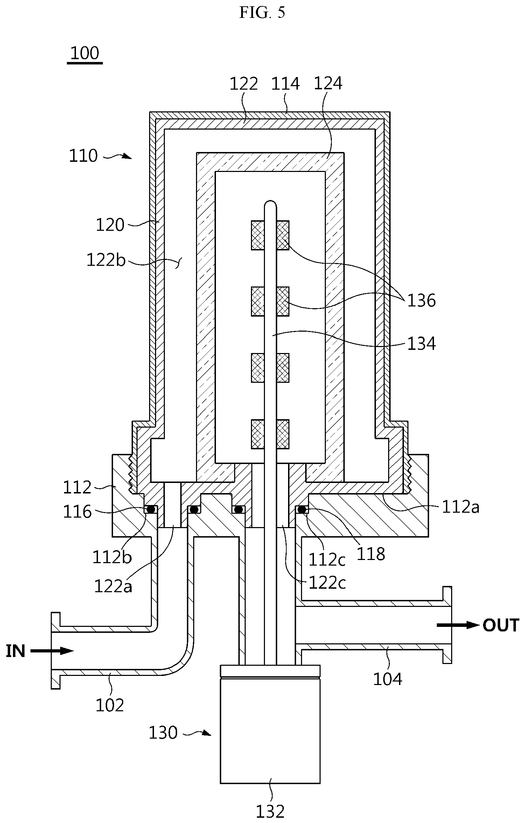

FIG. 5 is a cross-sectional view taken along line S1-S1' of the slurry filtering apparatus 100 shown in FIG. 1.

As shown in FIG. 5, the accommodation structure 110 of the slurry filtering apparatus 100 may include a base structure 112 and a cap structure 114.

The base structure 112 may have a first inlet 102 and a first outlet 104, and may support the filter 120. In this case, the lower end of the filter 120 may be inserted into and seated on the first insertion groove 112a of the base structure 112.

In addition, the second inlet 122a of the filter 120 may be inserted into the second insertion groove 112b of the base structure 112 so as to lead to the first inlet 102 of the accommodation structure 110. In this case, an O-ring 116 that prevents slurry from leaking may be interposed between the second inlet 122a of the filter 120 and the second insertion groove 112b of the base structure 112.

In addition, the second outlet 122c of the filter 120 may be inserted into the third insertion groove 112c of the accommodation structure 110 so as to lead to the first outlet 104 of the accommodation structure 110. In this case, an O-ring 118 that prevents slurry from leaking may be interposed between the second outlet 122c of the filter 120 and the third insertion groove 112c of the base structure 112.

The cap structure 114 may be coupled to the base structure 112 to form an accommodation space for accommodating the filter 120.

Next, the slurry supplied from a predetermined slurry supply device (not shown) and flowing in through the first inlet 102 may be received in the accommodation space 122b of the filter housing 122 through the second inlet 122a of the filter 120.

The slurry received in the accommodation space 122b of the filter housing 122 is filtered while passing through the porous structure 124 of the filter 120 and then collected in the hollow 124a of the porous structure 124.

The filtered slurry collected in the hollow 124a of the porous structure 124 may be discharged to the outside through the second outlet 122c of the filter housing 122 and the first outlet 104 of the base structure 112.

While performing filtering as described above, the ultrasonic module 130 of the slurry filtering apparatus 100 may generate ultrasonic vibration from the inside of the filter 120 to the outside thereof, thereby preventing occlusion of the porous structure 124.

To this end, one end of the insertion rod 134 of the ultrasonic module 130 and a plurality of vibrators 136 may be disposed in the hollow 124a of the porous structure 124. In this case, the insertion rod 134 may be inserted into the hollow 124a of the porous structure 124 through the first outlet 104 of the accommodation structure 110 and the second outlet 122c of the filter 120.

The plurality of vibrators 136 may be coupled to one end of the insertion rod 134 located in the internal space of the filter 120 so as to be spaced a predetermined distance apart from each other in the longitudinal direction of the insertion rod 134. For example, the plurality of vibrators 136 may be coupled to the insertion rod 134 so as to be spaced apart from each other by a predetermined distance ranging from 10 to 50 [mm].

When the high-frequency electrical signal generated by the oscillator 132 of the ultrasonic module 130 is transmitted to the plurality of vibrators 136, each of the plurality of vibrators 136 may generate ultrasonic vibration according to the high-frequency electrical signal. In this case, the frequency of the high-frequency electrical signal generated by the oscillator 132 may range from 30 to 10,000 [kHz].

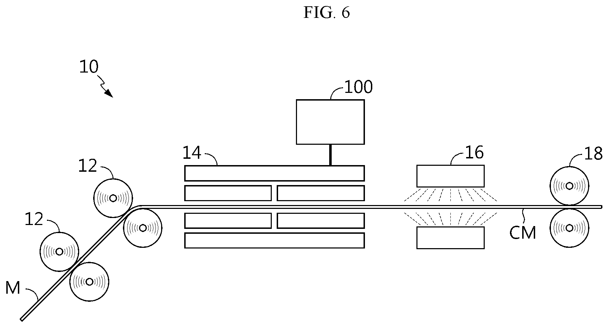

FIG. 6 is a diagram illustrating a separator manufacturing system 10 according to an embodiment of the present disclosure.

As shown in FIG. 6, a separator manufacturing system 10 according to an embodiment of the present disclosure may include a substrate supply unit 12 that supplies a porous polymer substrate M, a coating unit 14 that applies coating slurry filtered by the slurry filtering apparatus 100 according to the present disclosure to the porous polymer substrate M, a drying unit 16 that dries the solvent contained in the coating slurry, and a winding unit 18 that winds the porous polymer substrate CM on which a coating layer is formed in a roll shape.

The porous polymer substrate M is a substrate in which multiple pores are formed. These pores are configured to lead to each other, allowing gas or liquid to pass from one side of the substrate to the other side thereof. As such a porous polymer substrate, a porous polymer film containing a thermoplastic resin may be used from the viewpoint of providing a shutdown function. The shutdown function refers to a function of preventing thermal runaway of the battery, when the battery temperature rises high, by blocking movement of ions by melting the thermoplastic resin and occluding the pores of the porous substrate. The thermoplastic resin may have a melting point of approximately 200°C or less in terms of the shutdown function.

The thickness of the porous polymer substrate is not specifically limited, but may be approximately in the range of 1*µ*m to 100*µ*m or in the range of 5*µ*m to 50*µ*m, and the pores provided in the porous polymer substrate are also not specifically limited, but may be approximately in the range of 10% to 95% or in the range of 35% to 65%.

In the porous coating layer coated on the porous polymer substrate, inorganic particles may come into contact with each other to be bound to each other by binder polymer, thereby forming interstitial volumes between the inorganic particles, and the interstitial volumes may make a porous structure in the coating layer.

In an embodiment, the weight ratio of the inorganic particles to the binder polymer in the porous coating layer may be 99:1 to 50:50.

In the present disclosure, the binder polymer is not specifically limited as long as it is able to provide bonding force between the inorganic particles and bonding force between the porous coating layer and the electrode. For example, the binder polymer may include one or more selected from the group consisting of polyvinylidene fluoride-co-hexafluoro propylene (PVDF-co-HFP), polyvinylidene fluoride-co-trichloro ethylene, polyvinylidene fluoride-co-chlorotrifluoro ethylene, poly (methyl) methacrylate, poly ethyl (meth)acrylate, poly n-propyl (meth)acrylate, poly isopropyl (meth)acrylate, poly n-butyl (meth)acrylate, poly t-butyl (meth)acrylate, poly sec-butyl (meth)acrylate, poly pentyl (meth)acrylate, poly 2-ethylbutyl poly (meth)acrylate, poly 2-ethylhexyl (meth)acrylate, poly n-octyl (meth)acrylate, poly isooctyl (meth)acrylate, poly isononyl (meth)acrylate, poly lauryl (meth)acrylate, poly tetradecyl (meth)acrylate, poly N-vinylpyrrolidinone, polyacrylonitrile, polyvinyl acetate, polyethylene-co-vinyl acetate, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose, acrylonitrile-styrene-butadiene copolymer, and polyimide.

In addition, the binder polymer may be a particle-type binder polymer resin. For example, it may be an acrylic copolymer, styrene butadiene rubber, or a mixture of two or more thereof, and the acrylic copolymer may include copolymer of ethylhexyl acrylate and methyl methacrylate, polymethylmethacrylate, polyethylhexyl acrylate, polybutylacrylate, polyacrylonitrile, copolymer of butylacrylate and methyl methacrylate or a mixture of two or more thereof.

In the present disclosure, the inorganic particles are not specifically limited as long as they are electrochemically stable. For example, the inorganic particles are not specifically limited as long as oxidation and/or reduction reactions do not occur in the operating voltage range of the applied electrochemical device (e.g., 0 to 5 V based on Li/Li+), and may include, as unlimited examples, ZrO₂, BaTiO₃, Pb(Zr,Ti)O₃(PZT), Pb₁₋ₓLaₓZr_{1-y}Ti_{y}O₃(PLZT), PB(Mg₃Nb_{2/3})O₃-PbTiO₃(PMN-PT), Hafnia (HfO₂), SrTiO₃, SnO₂, CeO₂, MgO, NiO, CaO, ZnO, ZrO₂, Y₂O₃, Al₂O₃, TiO₂, AlOOH, Al(OH)₃, SiC, or mixtures thereof. Meanwhile, in addition thereto, inorganic particles of lithium phosphate (Li₃PO₄), lithium titanium phosphate (LiₓTi_{y}(PO₄)₃, 0<x<2 and 0<y<3), lithium aluminum titanium phosphate (LiₓAl_{y}Ti_{z}(PO₄)₃, 0<x<2, 0<y<1, and 0<z<3), (LiAlTiP)ₓO_{y}-based glass (0<x<4 and 0<y<13), lithium lanthanum titanate (LiₓLa_{y}TiO₃, 0<x<2 and 0<y<3), lithium germanium thiophosphate (LiₓGe_{y}P_{z}S_{w}, 0<x<4, 0<y<1, 0<z<1, and 0<w<5), lithium nitride (LiₓN_{y}, 0<x<4, and 0<y<2), SiS₂-based glass (LiₓSi_{y}S_{z}, 0<x<3, 0<y<2, and 0<z<4), P₂S₅-based glass (LiₓP_{y}S_{z}, 0<x<3, 0<y<3, and 0<z<7) or two or more thereof may be further included.

For reference, the slurry filtering apparatus 100 according to the present disclosure may also be applied to various coating processes using coating slurry as well as the above-described separator manufacturing system. That is, the slurry filtering apparatus 100 according to the present disclosure may also be applied to a coating process for a positive or negative electrode using slurry.

As described above, according to the present disclosure, since at least a portion of an ultrasonic module is disposed in the internal space of the filter to generate ultrasonic vibration from the inside of the filter toward the outside thereof, it is possible to effectively prevent occlusion of the innermost porous portions of the filter where aggregation of particles contained in the slurry occurs most frequently. As a result, it is possible to increase the continuous use time of the filter and the amount of filtering per unit time and reduce the time and cost of the coating process or manufacturing process using slurry.

In addition, since a base structure and a cap structure of an accommodation structure, which form a filter accommodation space by mutual coupling, are configured to be separated from each other, it is easy to manage or replace the filter.

In addition, since a porous structure of the filter, which filters the slurry, includes a plurality of porous layers stacked on each other from the hollow provided inside the porous structure toward the outside of the porous structure, it is possible to improve the performance of filtering particles contained in the slurry.

In addition, since the pores formed in the respective porous layers are configured to have a smaller diameter as they are located closer to the hollow, it is possible to prevent occlusion of the pores by the particles contained in the slurry and increase the effect of dispersing particles by ultrasonic vibration.

In addition, since vibrators of the ultrasonic module are disposed in the internal space of the filter so as to be spaced apart from each other in one direction and configured to generate ultrasonic vibration, it is possible to increase the transmission area of ultrasonic vibration transmitted to the filter and further improve the filtering performance.

In addition, by applying the slurry filtering apparatus according to the present disclosure to a separator manufacturing system, it is possible to reduce the time and cost of the separator coating process or manufacturing process, ensure the durability and insulation of the separator, and enable thinning of the separator, thereby improving the electrical capacity and energy density of secondary batteries.

Furthermore, it goes without saying that the embodiments according to the present disclosure are able to solve various technical problems other than those mentioned in this specification in the relevant technical fields as well as this technical field.

So far, the present disclosure has been described with reference to specific embodiments. However, those skilled in the art will clearly understand that various modified embodiments may be implemented within the technical scope of the present disclosure. Therefore, the previously disclosed embodiments should be considered as those intended to describe the present disclosure, instead of those intended to limit the present disclosure. In other words, the true scope of the technical idea of the present disclosure is shown in the claims, and all differences within the scope equivalent thereto should be construed as being included in the present disclosure.

## Claims

1. A slurry filtering apparatus (100) comprising:
an accommodation structure (110) having an accommodation space therein, and a first inlet (102) and a first outlet (104) leading to the accommodation space;
a filter (120) accommodated in the accommodation space and configured to filter slurry flowing in through the first inlet (102) and discharge the filtered slurry to the first outlet (104); and
an ultrasonic module (130) having at least a portion that is disposed in the internal space of the filter (120) and configured to generate ultrasonic vibration inside the filter (120),
**characterized in that**
the ultrasonic module (130) comprises:
an insertion rod (134) having a predetermined length and having at least one end inserted into the internal space of the filter (120); and
at least one vibrator (136) coupled to and supported by the one end of the insertion rod (134) and configured to generate ultrasonic vibration.

2. The slurry filtering apparatus (100) according to claim 1,
wherein the accommodation structure (110) comprises:
a base structure (112) having the first inlet (102) and the first outlet (104) and configured to support the filter (120); and
a cap structure (114) capable of being coupled to and separated from the base structure (112) and configured to form the accommodation space by being coupled to the base structure (112).

3. The slurry filtering apparatus (100) according to claim 2,
wherein the base structure (112) comprises:
a first insertion groove (112a) into which at least one end of the filter (120) is inserted so as to be seated thereon;
a second insertion groove (112b) provided on an inner surface of the first insertion groove (112a) so as to lead to the first inlet (102) and into which a second inlet (122a) provided at the one end of the filter (120) is inserted; and
a third insertion groove (112c) provided on the inner surface of the first insertion groove (112a) so as to lead to the first outlet (104) and into which a second outlet (122c) provided at the one end of the filter (120) is inserted.

4. The slurry filtering apparatus (100) according to claim 1,
wherein the filter (120) comprises a porous structure (124) configured to filter slurry flowing in through the first inlet (102), and
wherein the at least a portion of the ultrasonic module (130) is configured to be disposed in a hollow (124a) provided inside the porous structure (124).

5. The slurry filtering apparatus (100) according to claim 4,
wherein the porous structure (124) comprises a plurality of porous layers stacked on each other from the hollow (124a) toward the outside of the porous structure (124).

6. The slurry filtering apparatus (100) according to claim 5,
wherein pores formed in the plurality of porous layers are configured to have a smaller size as they are located closer to the hollow (124a).

7. The slurry filtering apparatus (100) according to claim 4,
wherein the filter (120) further comprises a filter housing (122) configured to accommodate the porous structure (124) therein, and
wherein the filter housing (122) comprises:
a second inlet (122a) leading to the first inlet (102) and providing slurry flowing in through the first inlet (102) to the porous structure (124); and
a second outlet (122c) leading to the first outlet (104) and discharging slurry filtered through the porous structure (124) to the first outlet (104).

8. The slurry filtering apparatus (100) according to claim 7,
wherein the porous structure (124) has an opening (124b) leading to the hollow (124a), and
wherein the opening (124b) is configured to lead to the second outlet (122c).

9. The slurry filtering apparatus (100) according to claim 1,
wherein the ultrasonic module (130) comprises a plurality of vibrators (136), and
wherein the plurality of vibrators (136) is coupled to the one end of the insertion rod (134) so as to be spaced a predetermined distance apart from each other in the longitudinal direction of the insertion rod (134).

10. The slurry filtering apparatus (100) according to claim 1,
wherein the ultrasonic module (130) further comprises an oscillator (132) configured to generate a high-frequency electrical signal corresponding to an oscillation frequency of the at least one vibrator (136) and provide the same to the at least one vibrator (136).

11. The slurry filtering apparatus (100) according to claim 1,
wherein the insertion rod (134) is configured to be inserted into the internal space of the filter (120) through the first outlet (104).

12. A separator manufacturing system (10) comprising the slurry filtering apparatus (100) according to any one of claims 1 to 11.

## Patentansprüche

1. Aufschlämmungsfiltereinrichtung (100), umfassend:
eine Aufnahmestruktur (110), aufweisend einen Aufnahmeraum darin, und einen ersten Einlass (102) und einen ersten Auslass (104), die zu dem Aufnahmeraum führen;
einen Filter (120), der in dem Aufnahmeraum aufgenommen ist und konfiguriert ist, durch den ersten Einlass (102) einströmende Aufschlämmung zu filtern und die gefilterte Aufschlämmung an den ersten Auslass (104) abzugeben; und
ein Ultraschallmodul (130) mit mindestens einem Abschnitt, der im Innenraum des Filters (120) angeordnet und konfiguriert ist, Ultraschallschwingungen im Inneren des Filters (120) zu erzeugen,
**dadurch gekennzeichnet, dass**
das Ultraschallmodul (130) umfasst:
einen Einführstab (134) mit einer vorbestimmten Länge und mit mindestens einem Ende, das in den Innenraum des Filters (120) eingeführt ist; und
mindestens einen Vibrator (136), der an das eine Ende des Einführstabs (134) gekoppelt und von diesem gestützt ist und konfiguriert ist, eine Ultraschallschwingung zu erzeugen.

2. Aufschlämmungsfiltereinrichtung (100) nach Anspruch 1,
wobei die Aufnahmestruktur (110) umfasst:
eine Basisstruktur (112), die den ersten Einlass (102) und den ersten Auslass (104) aufweist und konfiguriert ist, den Filter (120) zu stützen; und
eine Kappenstruktur (114), die geeignet ist, an die Basisstruktur (112) gekoppelt und von dieser getrennt zu werden, und konfiguriert ist, den Aufnahmeraum zu bilden, indem sie an die Basisstruktur (112) gekoppelt wird.

3. Aufschlämmungsfiltereinrichtung (100) nach Anspruch 2,
wobei die Basisstruktur (112) umfasst:
eine erste Einführnut (112a), in die mindestens ein Ende des Filters (120) eingeführt ist, um darauf zu sitzen;
eine zweite Einführnut (112b), die an einer Innenfläche der ersten Einführnut (112a) vorgesehen ist, um zu dem ersten Einlass (102) zu führen, und in die ein zweiter Einlass (122a), der an dem einen Ende des Filters (120) vorgesehen ist, eingeführt ist; und
eine dritte Einführnut (112c), die an der Innenfläche der ersten Einführnut (112a) vorgesehen ist, um zu dem ersten Auslass (104) zu führen, und in die ein zweiter Auslass (122c) eingeführt ist, der an dem einen Ende des Filters (120) vorgesehen ist.

4. Aufschlämmungsfiltereinrichtung (100) nach Anspruch 1,
wobei der Filter (120) eine poröse Struktur (124) umfasst, die konfiguriert ist, um durch den ersten Einlass (102) einströmende Aufschlämmung zu filtern, und
wobei der mindestens eine Abschnitt des Ultraschallmoduls (130) konfiguriert ist, um in einem Hohlraum (124a) angeordnet zu sein, der innerhalb der porösen Struktur (124) vorgesehen ist.

5. Aufschlämmungsfiltereinrichtung (100) nach Anspruch 4,
wobei die poröse Struktur (124) eine Vielzahl von porösen Schichten umfasst, die von dem Hohlraum (124a) in Richtung der Außenseite der porösen Struktur (124) aufeinander gestapelt sind.

6. Aufschlämmungsfiltereinrichtung (100) nach Anspruch 5,
wobei Poren, die in der Vielzahl von porösen Schichten gebildet sind, konfiguriert sind, um eine kleinere Größe aufzuweisen, wenn sie näher an dem Hohlraum (124a) angeordnet sind.

7. Aufschlämmungsfiltereinrichtung (100) nach Anspruch 4,
wobei der Filter (120) weiter ein Filtergehäuse (122) umfasst, das konfiguriert ist, um die poröse Struktur (124) darin aufzunehmen, und
wobei das Filtergehäuse (122) umfasst:
einen zweiten Einlass (122a), der zu dem ersten Einlass (102) führt und Aufschlämmung bereitstellt, die durch den ersten Einlass (102) zu der porösen Struktur (124) einströmt; und
einen zweiten Auslass (122c), der zu dem ersten Auslass (104) führt und Aufschlämmung, die durch die poröse Struktur (124) gefiltert ist, zu dem ersten Auslass (104) abgibt.

8. Aufschlämmungsfiltereinrichtung (100) nach Anspruch 7,
wobei die poröse Struktur (124) eine Öffnung (124b) aufweist, die zu dem Hohlraum (124a) führt, und
wobei die Öffnung (124b) konfiguriert ist, um zu dem zweiten Auslass (122c) zu führen.

9. Aufschlämmungsfiltereinrichtung (100) nach Anspruch 1,
wobei das Ultraschallmodul (130) eine Vielzahl von Vibratoren (136) umfasst, und
wobei die Vielzahl von Vibratoren (136) an das eine Ende des Einführstabs (134) gekoppelt ist, um in der Längsrichtung des Einführstabs (134) um einen vorbestimmten Abstand voneinander beabstandet zu sein.

10. Aufschlämmungsfiltereinrichtung (100) nach Anspruch 1,
wobei das Ultraschallmodul (130) weiter einen Oszillator (132) umfasst, der konfiguriert ist, um ein hochfrequentes elektrisches Signal zu erzeugen, das einer Schwingungsfrequenz des mindestens einen Vibrators (136) entspricht, und dieses an den mindestens einen Vibrator (136) bereitzustellen.

11. Aufschlämmungsfiltereinrichtung (100) nach Anspruch 1,
wobei der Einführstab (134) konfiguriert ist, um durch den ersten Auslass (104) in den Innenraum des Filters (120) eingeführt zu werden.

12. Separatorherstellungssystem (10), umfassend die Aufschlämmungsfiltereinrichtung (100) nach einem der Ansprüche 1 bis 11.

## Revendications

1. Appareil (100) de filtration de bouillie comprenant :
une structure de réception (110) présentant un espace de réception en son sein, et une première entrée (102) et une première sortie (104) menant à l'espace de réception ;
un filtre (120) reçu dans l'espace de réception et conçu pour filtrer la bouillie s'écoulant à travers la première entrée (102) et évacuer la bouillie filtrée vers la première sortie (104) ; et
un module ultrasonore (130) présentant au moins une partie qui est disposée dans l'espace interne du filtre (120) et conçue pour générer une vibration ultrasonore à l'intérieur du filtre (120),
**caractérisé en ce que**
le module ultrasonore (130) comprend :
une tige d'insertion (134) présentant une longueur prédéterminée et présentant au moins une extrémité insérée dans l'espace interne du filtre (120) ; et
au moins un vibrateur (136) accouplé à et supporté par l'une extrémité de la tige d'insertion (134) et conçu pour générer une vibration ultrasonore.

2. Appareil (100) de filtration de bouillie selon la revendication 1,
dans lequel la structure de réception (110) comprend :
une structure de base (112) présentant la première entrée (102) et la première sortie (104) et conçue pour supporter le filtre (120) ; et
une structure de capuchon (114) apte à être accouplée et séparée de la structure de base (112) et conçue pour former l'espace de réception en étant accouplée à la structure de base (112).

3. Appareil (100) de filtration de bouillie selon la revendication 2,
dans lequel la structure de base (112) comprend :
une première rainure d'insertion (112a) dans laquelle au moins une extrémité du filtre (120) est insérée de manière à être supportée sur celle-ci ;
une deuxième rainure d'insertion (112b) disposée sur une surface interne de la première rainure d'insertion (112a) de manière à mener à la première entrée (102) et dans laquelle une seconde entrée (122a) disposée au niveau de l'une extrémité du filtre (120) est insérée ; et
une troisième rainure d'insertion (112c) disposée sur la surface interne de la première rainure d'insertion (112a) de manière à mener à la première sortie (104) et dans laquelle une seconde sortie (122c) disposée au niveau de l'une extrémité du filtre (120) est insérée.

4. Appareil (100) de filtration de bouillie selon la revendication 1,
dans lequel le filtre (120) comprend une structure poreuse (124) conçue pour filtrer la bouillie s'écoulant à travers la première entrée (102), et
dans lequel l'au moins une partie du module ultrasonore (130) est conçue pour être disposée dans un creux (124a) disposé à l'intérieur de la structure poreuse (124).

5. Appareil (100) de filtration de bouillie selon la revendication 4,
dans lequel la structure poreuse (124) comprend une pluralité de couches poreuses empilées les unes sur les autres à partir du creux (124a) en direction de l'extérieur de la structure poreuse (124).

6. Appareil (100) de filtration de bouillie selon la revendication 5,
dans lequel les pores formés dans la pluralité de couches poreuses sont conçus pour présenter une taille plus petite car ils sont situés plus près du creux (124a).

7. Appareil (100) de filtration de bouillie selon la revendication 4,
dans lequel le filtre (120) comprend en outre un boîtier (122) de filtre conçu pour recevoir la structure poreuse (124) en son sein, et
dans lequel le boîtier (122) de filtre comprend :
une seconde entrée (122a) menant à la première entrée (102) et fournissant une bouillie s'écoulant à travers la première entrée (102) vers la structure poreuse (124) ; et
une seconde sortie (122c) menant à la première sortie (104) et évacuant la bouillie filtrée à travers la structure poreuse (124) vers la première sortie (104).

8. Appareil (100) de filtration de bouillie selon la revendication 7,
dans lequel la structure poreuse (124) présente une ouverture (124b) menant au creux (124a), et
dans lequel l'ouverture (124b) est conçue pour mener à la seconde sortie (122c).

9. Appareil (100) de filtration de bouillie selon la revendication 1,
dans lequel le module ultrasonore (130) comprend une pluralité de vibrateurs (136), et
dans lequel la pluralité de vibrateurs (136) est accouplée à l'une extrémité de la tige d'insertion (134) de manière à en être espacée d'une distance prédéterminée dans la direction longitudinale de la tige d'insertion (134).

10. Appareil (100) de filtration de bouillie selon la revendication 1,
dans lequel le module ultrasonore (130) comprend en outre un oscillateur (132) conçu pour générer un signal électrique haute fréquence correspondant à une fréquence d'oscillation de l'au moins un vibrateur (136) et fournir ce dernier à l'au moins un vibrateur (136).

11. Appareil (100) de filtration de bouillie selon la revendication 1,
dans lequel la tige d'insertion (134) est conçue pour être insérée dans l'espace interne du filtre (120) à travers la première sortie (104).

12. Système (10) de fabrication de séparateur comprenant l'appareil (100) de filtration de bouillie selon l'une quelconque des revendications 1 à 11.
